# EUROPEAN PATENT APPLICATION

(11) **EP 4 678 489 A1**
(43) Date of publication of application: **14.01.2026**
(21) Application number: 25159794.4
(22) Date of filing: 25.02.2025
(51) Int. Cl.: B60T 13/74, F16H 25/24, F16D 121/24, F16D 125/40, F16H 25/20

(54) **ELECTRO-MECHANICAL BRAKE DEVICE FOR VEHICLE**

(30) Priority: 10.07.2024 KR 20240091186
(71) Applicant: Hyundai Mobis Co., Ltd., Gangnam-gu Seoul 06141 (KR)
(72) Inventor: PARK, Si Yoon, 16891 Yongin-si (KR)
(74) Representative: Jung, Minkyu

(57) **Abstract**

An electro-mechanical brake device for a vehicle according to the present disclosure includes a housing, a spindle part installed inside the housing and rotated by a motor, a nut part rotatably coupled to the spindle part, a guide part formed concavely along a longitudinal direction of the housing on an inner surface of the housing, a notch part installed on an outer surface of the nut part, in contact with the guide part, and configured to guide the nut part to move rectilinearly along the guide part when the spindle part rotates, and a piston part configured to be pressurized by the nut part to generate a braking force for wheels.

## Description

### BACKGROUND

### 1. Technical Field

Exemplary embodiments of the present disclosure relate to an electro-mechanical brake device for a vehicle, and more particularly, to an electro-mechanical brake device for a vehicle, including a piston that reciprocates linearly by the power of an electric motor.

### 2. Description of the Related Art

The electro-mechanical brake device for a vehicle converts a rotational force between a motor and a ball screw into a forward motion of the ball screw to generate hydraulic pressure. In this case, a member called a notch is required to convert the rotational force of the motor into a rectilinear motion.

In view of the characteristics of the electro-mechanical brake device, when forming the hydraulic pressure through the forward and backward motion of the piston, damage to the notch or loosening of assembly may occur when changing the forward and backward direction. This may adversely affect the system performance and, in the worst case, may lead to failure of braking. Therefore, this needs to be improved.

The background technology of the present disclosure is disclosed in Korean Patent Publication No. 10-2023-0134171 (published on September 21, 2023, and entitled "ELECTRICALLY DRIVEN BRAKES FOR VEHICLES").

### SUMMARY

Various embodiments are directed to an electro-mechanical brake device for a vehicle, which is capable of preventing damage or loosening of a notch when forming hydraulic pressure through forward and backward motion of a piston.

In an embodiment, an electro-mechanical brake device may include: a housing, a spindle part installed inside the housing and rotated by a motor; a nut part rotatably coupled to the spindle part; a guide part formed concavely along a longitudinal direction of the housing on an inner surface of the housing; a notch part installed on an outer surface of the nut part, in contact with the guide part, and configured to guide the nut part to move rectilinearly along the guide part when the spindle part rotates; and a piston part configured to be pressurized by the nut part to generate a braking force for wheels.

The notch part may include a notch body part surrounding the outer surface of the nut part and made of a steel material, a notch cover part formed on an outer surface of the notch body part and in contact with the inner surface of the housing, and a notch protrusion part protruding on the notch cover part and movably mounted on the guide part, and the notch cover part and the notch protrusion part may be made of a resin material.

The notch cover part and the notch protrusion part may be insert injection molded on an outside of the notch body part.

The notch body part may include a notch main body part mounted on the outer surface of the nut part, and a notch pressing part formed on a lower surface of the notch main body part by chamfering the notch main body part along a circumferential direction of the notch main body part.

The notch cover part may include a notch cover side part surrounding an outer surface of the notch main body part, and a notch cover chamfer part in contact with the notch pressing part on a lower surface of the notch cover side part.

The notch cover part may further include notch cover discharge holes formed through the notch cover side part and capable of discharging resin.

The notch protrusion part may include a notch main protrusion protruding on the notch cover part and movably mounted on the guide part, and a notch injection hole formed through the notch main protrusion and into which resin is injected.

A plurality of notch protrusion parts may be formed in the notch cover part along a circumferential direction of the notch cover part.

The notch body part may be press-fitted to the nut part.

According to the electro-mechanical brake device for a vehicle of the present disclosure, when forming the hydraulic pressure through the forward and backward motion of the piston, the notch is prevented from being damaged or disassembled, thereby ensuring the stability of braking.

In addition, according to the present disclosure, the manufacturing cost of the notch can be reduced, and quality excellence can be secured.

### BRIEF DESCRIPTION OF THE DRAWINGS

FIG. 1 is an exploded perspective view schematically illustrating an electro-mechanical brake device for a vehicle according to an embodiment of the present disclosure.
FIG. 2 is a cross-sectional view schematically illustrating an electro-mechanical brake device for a vehicle according to an embodiment of the present disclosure.
FIG. 3 is a perspective view schematically illustrating a notch part in an electro-mechanical brake device for a vehicle according to an embodiment of the present disclosure.
FIG. 4 is a bottom perspective view schematically illustrating a notch part in an electro-mechanical brake device for a vehicle according to an embodiment of the present disclosure.
FIG. 5 is a schematic cross-sectional view taken along line A-A of FIG. 3.

### DETAILED DESCRIPTION

Hereinafter, an electro-mechanical brake device for a vehicle according to the present disclosure will be described below with reference to the accompanying drawings through various exemplary embodiments. Here, thicknesses of lines illustrated in the drawings, sizes of constituent elements, or the like may be exaggerated for clarity and convenience of description.

In addition, terms to be described below have been defined by taking into consideration their functions in the present disclosure, and may be different depending on a user or operator's intention or practice. Accordingly, such terms should be interpreted based on the overall contents of this specification.

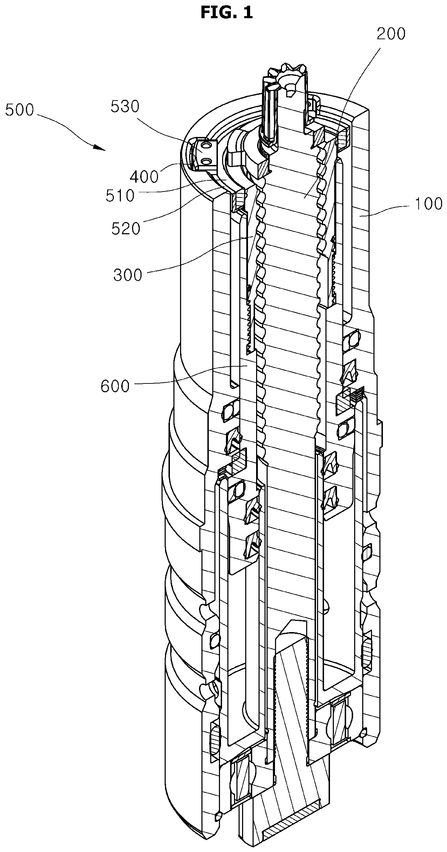

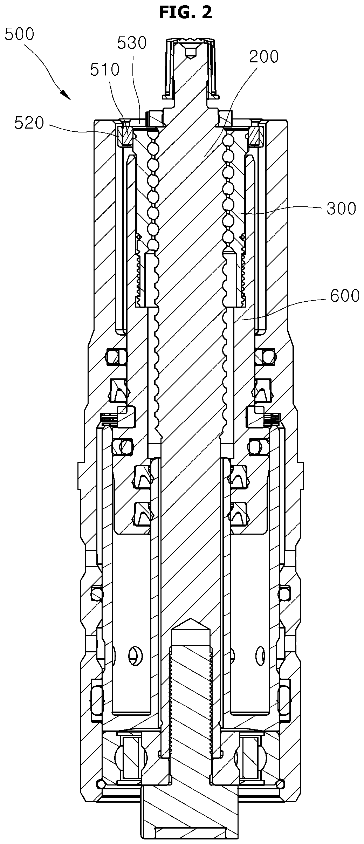

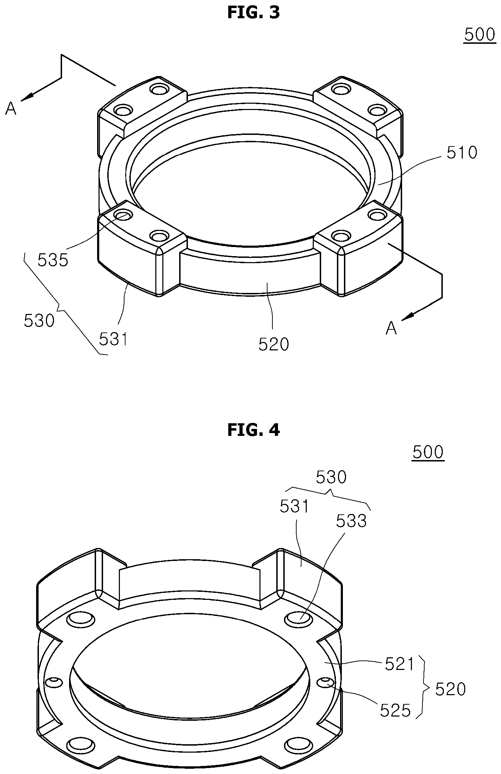

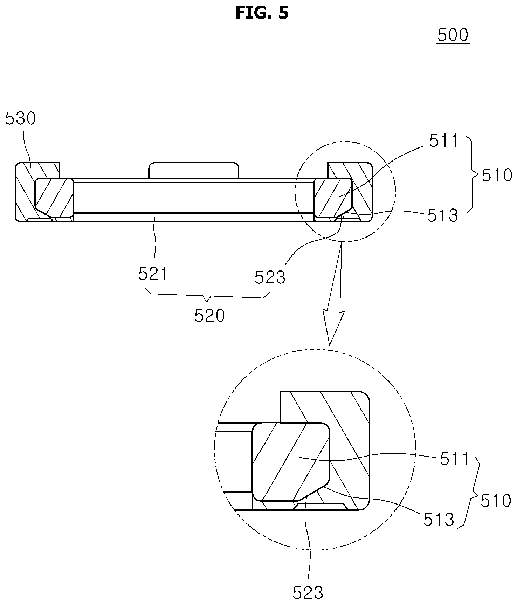

FIG. 1 is an exploded perspective view schematically illustrating an electro-mechanical brake device for a vehicle according to an embodiment of the present disclosure. FIG. 2 is a cross-sectional view schematically illustrating an electro-mechanical brake device for a vehicle according to an embodiment of the present disclosure. FIG. 3 is a perspective view schematically illustrating a notch part in the electro-mechanical brake device for a vehicle according to an embodiment of the present disclosure. FIG. 4 is a bottom perspective view schematically illustrating the notch part in an electro-mechanical brake device for a vehicle according to an embodiment of the present disclosure. FIG. 5 is a schematic cross-sectional view taken along line A-A of FIG. 3.

Referring to FIGS. 1 to 5, the electro-mechanical brake device for a vehicle according to an embodiment of the present disclosure includes a housing 100, a spindle part 200, a nut part 300, a guide part 400, a notch part 500, and a piston part 600.

The housing 100 has a hollow shape and accommodates the spindle part 200, the nut part 300, the guide part 400, the notch part 500, the piston part 600, etc. therein.

The spindle part 200 is mounted in the housing 100 and may be rotated by a motor (not shown). The spindle part 200 may include a gear part that is rotated by a driving force of the motor and engaged with a motor shaft of the motor.

The nut part 300 may be rotatably coupled to the spindle part 200. The nut part 300 has a cylindrical shape. The nut cylinder 300 may be coupled to an outer surface of the spindle cylinder 200 by a combination of a ball screw and a nut.

A ball may be mounted between the nut part 300 and the spindle part 200, thereby reducing friction and load between the nut part 300 and the spindle part 200.

The nut part 300 may move within the housing 100 by the rotation of the spindle part 200. The nut part 300 is restricted from rotating within the housing 100 by the notch part 500 and may rectilinearly move along the longitudinal direction of the housing 100 (upper and lower direction based on FIGS. 1 and 2).

The guide part 400 may be disposed concavely along the longitudinal direction of the housing 100 on an inner surface of the housing 100. In the guide part 400, the notch part 500 may move up and down in the longitudinal direction of the housing 100.

A width of the guide part 400 may be larger than or equal to a width of the notch part 500. Accordingly, in the guide part 400, the notch part 500 may move up and down along the longitudinal direction of the housing 100.

The guide part 400 may be disposed on the inner surface of the housing 100 to correspond to the number of notch part 500.

The notch part 500 may be mounted on the outer surface of the nut part 300 and come into contact with the guide part 400. The notch part 500 may move rectilinearly along the guide part 400 in the longitudinal direction of the housing 100. The notch part 500 may guide the nut part 300 to move rectilinearly along the guide part 400 when the spindle part 200 rotates. The nut part 300 may have the notch part 500 mounted on the outer surface thereof and may move together with the notch part 500.

When the spindle part 200 rotates, the nut part 300 is restricted from rotating by the notch part 500 that contacts the guide part 400. Accordingly, the nut part 300 may move up and down rectilinearly along the guide part 400 in the longitudinal direction of the housing 100.

The piston part 600 may be pressurized by the nut part 300 to generate a braking force for the wheel. The piston part 600 may be engaged with the outer surface of the nut part 300. The piston part 600 may be compressed or expanded by the nut part 300 moving up and down rectilinearly to generate a braking force for the wheel by the pressure of the brake fluid. The nut part 300 may move up and down rectilinearly within the housing 100 by the rotation of the spindle part 200 and pressurize the piston part 600, and the piston part 600 may generate the braking force of the wheel and transmit the braking force to the wheel.

The configuration and operation of the notch part 500 will be described with reference to FIGS. 3 to 5. The notch part 500 may include a notch body part 510, a notch cover part 520, and notch protrusion parts 530.

The notch body part 510 may surround the outer surface of the nut part 300 and be made of a steel material. The notch body part 510 may be formed in a ring shape that surrounds the outer surface of the nut part 300.

The notch body part 510 may be press-fitted to the outer surface of the nut part 300. The notch body part 510 may be press-fitted to the outer surface of the nut part 300, and thus, the assembly time of the notch part 500 and the nut part 300 may be shortened. In addition, the notch body part 510 may be maintained in a state of being firmly coupled to the outer surface of the nut part 300 by simple assembly.

The notch cover part 520 may be on the outer surface of the notch body part 510 and come into contact with the inner surface of the housing 100. The notch cover part 520 may support the outer surface and the lower surface of the notch body part 510.

The notch protrusion parts 530 may be disposed to protrude from the notch cover part 520 and movably mounted on the guide part 400. The number of guide part 400 may be determined according to the number of notch protrusion parts 530. The width of each of the notch protrusion parts 530 may be smaller than or equal to the width of the guide part 400.

The notch cover part 520 and the notch protrusion part 530 may be made of a resin material. The notch cover part 520 and the notch protrusion part 530 may include a resin material, and may be parts that are worn to be repaired and replaced when the notch cover part 520 and the notch protrusion parts 530 that slide come into contact with the housing 100 or the guide part 400. The notch cover part 520 and the notch protrusion parts 530 may be made of a relatively cheaper material than the housing 100 or the guide part 400, so that maintenance costs can be reduced.

The notch cover part 520 and the notch protrusion parts 530 may be insert injection molded on the outside of the notch body part 510. The notch cover part 520 and the notch protrusion parts 530 made of molten resin material may be insert injection molded on the outside of the notch body part 510 made of steel material, and then solidified. Therefore, the notch cover part 520 and the notch protrusion parts 530 can be simply formed integrally with the notch body part 510.

The notch cover part 520 may be designed to cover the entire outer of the notch body part 510, so that manufacturing cost can be reduced by escaping from tolerance constraints. In addition, the notch cover part 520 may be structured to cover the notch body part 510 to prevent the separation of the notch cover part 520 and the notch body part 510.

The notch body part 510 may include a notch main body part 511 and a notch pressing part 513. The notch main body part 511 may be mounted on the outer surface of the nut part 300. The notch main body part 511 may be formed in a ring shape that surrounds the outer surface of the nut part 300. The notch main body part 511 may be press-fitted to the outer surface of the nut part 300.

The notch pressing part 513 may be formed by chamfering a lower surface of the notch main body part 511 along the circumferential direction of the notch main body part 511. The notch pressing part 513 may be formed to slope upward from the lower surface of the notch main body part 511 toward the side of the notch main body part 511. The notch pressing part 513 may be formed by chamfering diagonally the notch main body part 511 so that a contact surface of the notch cover part 520 may be increased.

The notch cover part 520 may include a notch cover side part 521 and a notch cover chamfer part 523. The notch cover side part 521 may cover the outer surface of the notch main body part 511. The notch cover side part 521 may support the outer surface and the lower surface of the notch body part 510.

The notch cover chamfer part 523 may be in contact with the notch pressing part 513 on a lower surface of the notch cover side part 521. The notch cover chamfer part 523 may be inclined upward from the lower surface of the notch cover side part 521 toward the side of the notch cover side part 521. The notch cover chamfer part 523 may be in contact with the notch pressing part 513. The notch cover chamfer part 523 and the notch pressing part 513 may be in contact with each other, and thus, the contact area between the notch cover part 520 and the notch body part 510 can be increased.

The notch cover part 520 may further include notch cover discharge holes 525. The notch cover discharge holes 525 may be formed through the notch cover side part 521 and may discharge resin. The notch cover discharge holes 525 may discharge an excessive amount of molten resin.

Each of the notch protrusion part 530 may include a notch main protrusion 531 and a notch injection hole 533. The notch main protrusion 531 may be formed to protrude from the notch cover part 520 and may be movably mounted on the guide part 400.

A width of the notch main protrusion 531 may be smaller than or equal to the width of the guide part 400.

The notch injection holes 533 may penetrate the notch main protrusions 531 and may be disposed as a hole into which resin is injected. The molten resin may be injected through the notch injection holes 533 to form the notch cover part 520 and the notch protrusion parts 530 in the notch body part 510.

Each of the notch protrusion parts 530 may further include notch squeezing pins 535. The notch squeezing pin 535 may be disposed at the notch main protrusion 531 in an opposite direction to the notch injection hole 533. The notch part 500 manufactured by being pressed by the notch squeezing pins 535 may be separated from a manufacturing mold (not shown).

At least one notch protrusion 530 may be formed at the notch cover part 520 along the circumferential direction of the notch cover part 520. Two or more notch protrusions 530 may be formed at the notch cover part 520. The two or more notch protrusions 530 may be formed along the circumferential direction of the notch cover part 520 so that the notch part 500 that moves up and down can stably move rectilinearly while maintaining left-right balance on the guide part 400.

According to the electro-mechanical brake device for a vehicle according to the present disclosure, when the hydraulic pressure is formed through the forward and backward movement of a piston part, the notch can be prevented from being damaged or disassembled, thereby ensuring the stability of braking.

In addition, according to the present disclosure, the manufacturing cost of the notch can be reduced, and quality excellence can be secured.

Although specific embodiments of the present disclosure have been described above, the spirit and scope of the present disclosure are not limited to these specific embodiments. Various modifications and variations are possible within the scope of not changing the gist of the present disclosure as stated in the claims by those skilled in the art to which the present disclosure pertains.

## Claims

1. An electro-mechanical brake device for a vehicle, comprising:
a housing;
a spindle part installed inside the housing and rotated by a motor;
a nut part rotatably coupled to the spindle part;
a guide part formed concavely along a longitudinal direction of the housing on an inner surface of the housing;
a notch part installed on an outer surface of the nut part, in contact with the guide part, and configured to guide the nut part to move rectilinearly along the guide part when the spindle part rotates; and
a piston part configured to be pressurized by the nut part to generate a braking force for wheels.

2. The electro-mechanical brake device for the vehicle of claim 1,
wherein the notch part comprises:
a notch body part surrounding the outer surface of the nut part;
a notch cover part formed on an outer surface of the notch body part and in contact with the inner surface of the housing; and
a notch protrusion part protruding on the notch cover part and movably mounted on the guide part

3. The electro-mechanical brake device for the vehicle of claim 2,
wherein the notch body part is made of a steel material, and
wherein the notch cover part and the notch protrusion part are made of a resin material.

4. The electro-mechanical brake device for the vehicle of claim 2 or 3, wherein the notch cover part and the notch protrusion part are insert injection molded on an outside of the notch body part.

5. The electro-mechanical brake device for the vehicle of any one of claims 2 to 4, wherein the notch body part comprises:
a notch main body part mounted on the outer surface of the nut part; and
a notch pressing part formed on a lower surface of the notch main body part by chamfering the notch main body part along a circumferential direction of the notch main body part.

6. The electro-mechanical brake device for the vehicle of any one of claims 2 to 5, wherein the notch cover part comprises:
a notch cover side part surrounding an outer surface of the notch main body part; and
a notch cover chamfer part in contact with the notch pressing part on a lower surface of the notch cover side part.

7. The electro-mechanical brake device for the vehicle of claim 6, wherein the notch cover part further comprises notch cover discharge holes formed through the notch cover side part and capable of discharging resin.

8. The electro-mechanical brake device for the vehicle of any one of claims 2 to 7, wherein the notch protrusion part comprises:
a notch main protrusion protruding on the notch cover part and movably mounted on the guide part; and
a notch injection hole formed through the notch main protrusion and into which resin is injected.

9. The electro-mechanical brake device for the vehicle of any one of claims 2 to 8, wherein a plurality of notch protrusion parts are formed in the notch cover part along a circumferential direction of the notch cover part.

10. The electro-mechanical brake device for the vehicle of any one of claims 2 to 9, wherein the notch body part is press-fitted to the nut part.
